# EUROPÄISCHE PATENTANMELDUNG

(11) **EP 1 524 883 A1**
(43) Veröffentlichungstag der Anmeldung: **20.04.2005**
(21) Anmeldenummer: 03023452.0
(22) Anmeldetag: 18.10.2003
(51) Int. Cl.: H05B 6/64, H05B 6/78, H05B 6/80, F16L 53/00, F16L 55/00

(54) **Vorrichtung zum Beheizen von in rohrförmigen Transport-und/oder Förderleitungen transportierten fluiden Medien**

(71) Anmelder: Pollinger, Hartwig, 11100 Aosta (IT)
(72) Erfinder: Pollinger, Hartwig, 11100 Aosta (IT)
(74) Vertreter: nospat Patentanwälte

(57) **Zusammenfassung**

Die Erfindung betrifft eine Vorrichtung zum Beheizen von in rohrförmigen Transport- und/oder Förderleitungen transportierten fluiden Medien, insbesondere von Rohoder raffiniertem Erdöl mit geringem Wassergehalt, wobei der rohrförmigen Transport- und/oder Förderleitung (1) eine Einrichtung (3) zur Einspeisung von Mikrowellenenergie zugeordnet ist.

Aufgabe ist es, eine Vorrichtung zum Beheizen von in rohrförmigen Transport- und/oder Förderleitungen transportierten fluiden Medien, insbesondere von Rohoder raffiniertem Erdöl mit geringem Wassergehalt, anzugeben, wobei mit vergleichsweise geringem technischen Aufwand in durch Gebiete mit äußerst ungünstigen klimatischen Verhältnissen insbesondere der Dauerfrostzone führende Transport- und/oder Förderleitungen transportierten fluiden Medien effektiv und wirksam unter Verwendung von Mikrowellenenergie beheizt werden können.

Erfindungsgemäß wird diese Aufgabe dadurch gelöst, daß in mindestens einem Rohrabschnitt (1.1;1.2;1.3) der rohrförmigen Transport- und/oder Förderleitung (1) eine Mehrzahl von Einrichtungen (3) zur Einspeisung von Mikrowellenenergie vorgesehen sind, wobei jede Einrichtung zur Einspeisung von Mikrowellenenergie aus einem Mikrowellengenerator (4) und einer mit diesem gekoppelten Hohlleiterantenne (5) besteht.

## Beschreibung

Die Erfindung betrifft eine Vorrichtung zum Beheizen von in rohrförmigen Transportund/oder Förderleitungen transportierten fluiden Medien, insbesondere von Rohoder raffiniertem Erdöl mit geringem Wassergehalt, wobei der rohrförmigen Transport- und/oder Förderleitung eine Einrichtung zur Einspeisung von Mikrowellenenergie zugeordnet ist.

Das Transportieren von fluiden Medien, insbesondere von Roh- oder raffiniertem Erdöl, beispielsweise vom Gewinnungsort zum Verarbeitungsbetrieb, zum Verschiffungshafen o. dgl., unter Verwendung von rohrförmigen Transport- und/oder Förderleitungen ist bereits seit langem bekannt. Sofern die Rohrleitung durch Gebiete geführt ist, die ungünstigen klimatischen Bedingungen, vor allem niederen Außentemperaturen unterliegen, ist es weiterhin allgemein bekannt, zur Verringerung der Wärmeverluste beim Transport erwärmter fluider Medien die Rohrleitung mit Dämmstoffen zu umkleiden und/oder die Rohrleitung unterirdisch zu verlegen. Führen die Rohrleitungen allerdings durch Gebiete der Dauerfrostzone, dann können auch derartige Maßnahmen nicht mehr erfolgreich sein. Es besteht die Gefahr des zumindest teilweisen Einfrierens des Rohrquerschnitts der Leitung, was in aller Regel infolge des Druckaufbaues zum Bersten der Rohrleitung führt. Da Roh- oder Erdöl meist einen geringen Wassergehalt von 5 - 10 % besitzt, ist diese Gefahr bei Ölpipelines durchaus von praktischer Bedeutung, jedoch auch beim Rohrtransport von anderen frostgefährdeten fluiden Medien zu beachten.

Es ist weiterhin bekannt, Rohrleitungen aus unterschiedlichen Gründen zu beheizen. So geht aus EP 0 873 045 A1 eine elektromagnetische Induktionsheizeinrichtung für einen Rohrabschnitt als bekannt hervor. DE 35 32 979 A1 beschreibt eine innenliegende Begleitheizung für Rohrleitungen, wobei ein von einem Heizmedium durchströmter schlauchförmiger Hohlkörper im Inneren einer Rohrleitung angeordnet ist. Derartige Heizeinrichtungen sind allerdings für oben genannte Anwendungsgebiete völlig ungeeignet.

Des weiteren ist es bekannt, viskose Massen bzw. fluide Medien in Rohrleitungen durch Einspeisung von Mikrowellenenergie zu erwärmen. So ist in DE 196 47 922 A1 eine Vorrichtung zur Erwärmung von viskosen Massen durch Mikrowellenenergie beschrieben, wobei die Masse im wesentlichen kontinuierlich durch eine langgestreckte Behandlungskammer geführt wird, welche mit einem Mikrowellenfeld beaufschlagt ist. In der Behandlungskammer sind Strömungshindernisse angeordnet, welche eine gleichzeitige Mischung der Masse veranlassen. Allerdings ist diese Vorrichtung nicht für den kontinuierlichen Fluß eines Mediums in einer Rohrleitung geeignet.

Aus DE 195 31 088 A1 geht des weiteren eine Vorrichtung zur thermischen Behandlung von in Rohrleitungen transportierten Stoffen mittels Mikrowellen und Heatpipes als bekannt hervor. Dabei weist ein Rohrabschnitt eine Vielzahl in axialer und azimutaler Teilung angeordneter Schlitze auf, denen ringförmige Hohlraumresonatoren zugeordnet sind. Diese sind über Koppelstifte mit zuführenden Mikrowellenhohlleitern verbunden, in die ein Mikrowellengenerator Mikrowellenleistung einspeist. Die Schlitze sind durch abriebfeste und paßgenaue, verlustarme, dielektrische Fenster zum Hohlraumresonator hin verschlossen. Um bei Bruch eines Fensters den Austritt des zu transportierenden Stoffes zu verhindern, sind auch die Hohlraumresonatoren mit einem verlustarmen Dielektrikum aufgefüllt.

Diese bekannte Vorrichtung ist technisch recht aufwendig und damit teuer. Als nachteilig wird die Anordnung einer größeren Anzahl von Schlitzen in einem Rohrabschnitt der Leitung gesehen, welche durch dielektrisches Material bündig zu verschließen sind. Diese Schlitze beinhalten bei den relativ hohen anliegenden Drücken eine erhebliche Bruchgefahr, so daß zumindest hohe Leckverluste, verbunden mit Umweltverschmutzungen, die unerwünschten Folgen sind. Außerdem ist die Funktionstüchtigkeit der Anlage nicht mehr gewährleistet, was weitere negative Folgen bis zum Bersten der Leitung beinhaltet.

In DE 101 28 038 C1 ist weiterhin ein mikrowellentechnischer Durchlauferhitzer zum Erwärmen fluider Medien beschrieben. Dieser besteht aus einer Mikrowellenquelle, die über eine Einkoppelöffnung in einen quaderförmigen Applikator eingekoppelt ist. Dieser enthält ein parallel zur Einkoppelöffnung verlaufendes dielektrisches Rohr, an das beidendig metallische Rohrstutzen (einer Rohrleitung für das zu erwärmende Medium) angesetzt sind.

Diese Vorrichtung ist für den Einsatz an rohrförmigen Transport- und/oder Förderleitungen größerer Durchmesser und damit größerer Durchsatzmengen aufgrund ihres Aufwandes und der erforderlichen Dimensionierung nicht geeignet.

In Anbetracht der Nachteile des bekannten Standes der Technik liegt der Erfindung die Aufgabe zugrunde, eine Vorrichtung zum Beheizen von in rohrförmigen Transport- und/oder Förderleitungen transportierten fluiden Medien, insbesondere von Roh- oder raffiniertem Erdöl mit geringem Wassergehalt, wobei der rohrförmigen Transport- und/oder Förderleitung eine Einrichtung zur Einspeisung von Mikrowellenenergie zugeordnet ist, anzugeben, wobei mit vergleichsweise geringem technischen Aufwand in durch Gebiete mit äußerst ungünstigen klimatischen Verhältnissen insbesondere der Dauerfrostzone führende Transport- und/oder Förderleitungen transportierten fluiden Medien effektiv und wirksam unter Verwendung von Mikrowellenenergie beheizt werden können.

Erfindungsgemäß wird diese Aufgabe dadurch gelöst, daß in mindestens einem Rohrabschnitt der rohrförmigen Transport- und/oder Förderleitung eine Mehrzahl von Einrichtungen zur Einspeisung von Mikrowellenenergie vorgesehen sind, wobei jede Einrichtung zur Einspeisung von Mikrowellenenergie aus einem Mikrowellengenerator und einer mit diesem gekoppelten Hohlleiterantenne besteht.

Die derart ausgestaltete Vorrichtung ist zum Beheizen von fluiden Medien in rohrförmigen Transport- und/oder Förderleitungen insbesondere unter besonders ungünstigen klimatischen Bedingungen, wie Gebiete der Dauerfrostzone, gut geeignet. Das trifft besonders zu für Roh- bzw. Erdölleitungen auch größerer Durchmesser, wobei das Öl einen geringen Wassergehalt besitzt. Die Mikrowellenenergie wird auf effektive Weise und unter Nutzung einer Summenwirkung einer Mehrzahl von Einspeisungseinrichtungen in das Innere der Rohrleitung eingekoppelt, wobei Energieverluste weitgehend vermieden sind. Dabei ist die Vorrichtung selbst technisch einfach und preisgünstig gestaltet und gewährleistet eine störungsfreie Arbeitsweise im Dauerbetrieb.

In vorteilhafter Ausgestaltung der Erfindung ist bei Pumpstationen aufweisenden Rohrleitungen der mit einer Mehrzahl von Einrichtungen zur Einspeisung von Mikrowellenenergie ausgestattete Rohrabschnitt der rohrförmigen Transport- und/oder Förderleitung zwischen zwei der rohrförmigen Transport- und/oder Förderleitung zugeordneten Pumpstationen angeordnet.

In weiterer vorteilhafter Ausgestaltung ist jede Hohlleiterantenne quer zur Längsachse der rohrförmigen Transport- und/oder Förderleitung derart an dieser angeordnet, daß sich der Mikrowellengenerator mit der Einkopplung in die Hohlleiterantenne außerhalb der rohrförmigen Transport- und/oder Förderleitung befindet und die Hohlleiterantenne mit ihrem Abstrahlende sich durch eine Bohrung druckdicht in das Innere der rohrförmigen Transport- und/oder Förderleitung erstreckt.

Dabei ist in einer zweckmäßigen Variante eine linienförmige und gleichteilige Anordnung der Hohlleiterantennen parallel zur Längsachse der rohrförmigen Transportund/oder Förderleitung günstig.

In einer weiteren zweckmäßigen Variante sind die Hohlleiterantennen in gleicher oder ungleicher Kreisteilung am Umfang der rohrfömigen Transport- und/oder Förderleitung angeordnet.

Dabei sind in einer energetisch zweckmäßigen Ausführungsform die Abstrahlenden der Hohlleiterantennen etwa im Bereich der (zentralen) Längsachse der rohrförmigen Transport- und/oder Förderleitung angeordnet. In einer anderen Ausführungsform sind die Abstrahlenden der Hohlleiterantennen etwa bündig zur Innenfläche der rohrförmigen Transport- und/oder Förderleitung angeordnet, um eine Störung der Rohrströmung weitgehend zu verhindern.

In weiterer zweckmäßiger und fertigungstechnisch günstiger Ausgestaltung sind die Hohlleiterantennen in die rohrförmige Transport- und/oder Förderleitung eingeschweißt.

Zweckmäßigerweise besteht des weiteren die Hohlleiterantenne aus einem Rohr aus Metall oder aus einer Metallegierung, dessen oberes Ende durch eine Kurzschlußplatte verschlossen ist, unterhalb der sich ein mit dem Mikrowellengenerator über ein Kabel verbundener, ins Rohrinnere ragender Einkoppelstift befindet, während das untere Ende als Abstrahlende ausgeführt ist und ein Anpaßelement für die optimale Mikrowellenenergieübertragung aufweist. Dabei ist es vorteilhaft, daß das Anpaßelement als dielektrischer Einsatz ausgeführt ist und eine ein- oder mehrfach zylindrisch abgesetzte zylindrische Grundform besitzt.

In weiterer zweckmäßiger Ausgestaltung der Erfindung sind die Mikrowellengeneratoren über Steuergeräte derart an eine oder mehrere Energiequellen angeschlossen, daß eine permanente und/oder in vorwählbaren Zeitintervallen erfolgende Einspeisung von Mikrowellenenergie erfolgt.

Die Erfindung wird nachstehend an einem Ausführungsbeispiel in mehreren Varianten näher erläutert. In der zugehörigen Zeichnung zeigen:
- Fig. 1: einen teilweise geschnittenen Rohrabschnitt einer Erdölrohrleitung zwischen zwei Pumpstationen,
- Fig. 2: den Querschnitt durch eine Ausführungsvariante nach Linie II - II in Fig. 1,
- Fig. 3: den Querschnitt durch eine zweite Ausführungsvariante analog nach Linie II - II in Fig. 1,
- Fig. 4: den Axialschnitt durch eine zweckmäßig ausgestaltete Hohlleiterantenne.

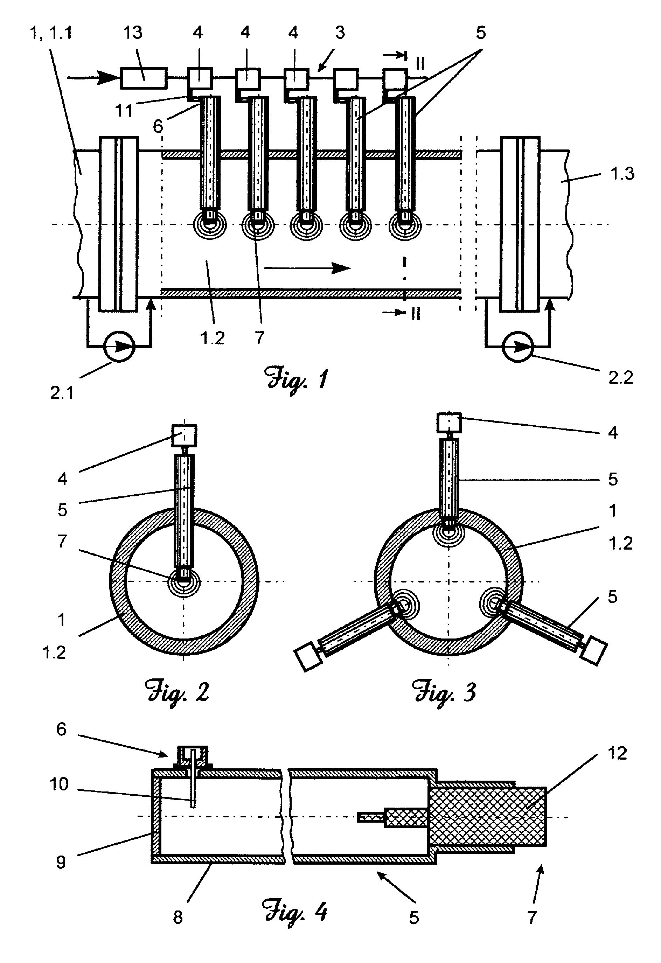

Eine Erdölrohrleitung 1 besteht beispielsgemäß entsprechend ihrer Länge aus einer größeren Anzahl von Rohrabschnitten 1.1, 1.2, 1.3......, zwischen denen (etwa in Abständen von 70 - 100 km) Pumpstationen 2.1, 2.2.... angeordnet sind (s. Fig. 1).

In einem Rohrabschnitt 1.2 sind eine größere Anzahl von Einrichtungen 3 zur Einspeisung von Mikrowellenenergie wie folgt angeordnet: Die Einrichtungen 3 bestehen jeweils aus einem Mikrowellengenerator 4 und einer mit diesem gekoppelten Hohlleiterantenne 5. Jede Hohlleiterantenne 5 ist quer zur Längsachse der Erdölrohrleitung 1 in der Rohrleitung 1 eingeschweißt, wobei sich der Mikrowellengenerator 4 mit der Einkoppelstelle 6 in die Hohlleiterantenne 5 außerhalb der Erdölrohrleitung 1 befindet und die Hohlleiterantenne 5 mit ihrem Abstrahlende 7 sich durch eine Bohrung druckdicht in das Innere der Erdölrohrleitung 1 erstreckt.

In einer ersten Ausführungsvariante gemäß Fig. 1 und 2 sind die Hohlleiterantennen 5 längs einer (gedachten) Linie in gleichteiliger Anordnung parallel zur Längsachse der Erdölrohrleitung 1 in dieser eingeschweißt, wobei sich die Abstrahlenden 7 etwa zentrisch in der Erdölrohrleitung 1, d. h. etwa im Bereich deren Längsachse, befinden, so daß die Mikrowellenenergie zentral im Inneren der Erdölrohrleitung 1 bei etwa kugelförmiger Mikrowellenausbreitung eingebracht wird.

In einer zweiten Ausführungsvariante nach Fig. 3 sind die Hohlleiterantennen 5 in gleicher Kreisteilung am Umfang der Erdölrohrleitung 1 derart angeordnet, daß die Abstrahlenden 7 nahe der Innenfläche der Erdölrohrleitung 1 sitzen. Dadurch wird die Mikrowellenenergie nahe der Rohrwand bei etwa kugelförmiger Mikrowellenausbreitung eingebracht, wobei eine geringere Störung der Rohrströmung erfolgt.

Die Hohlleiterantenne 5 (s. Fig. 4) besteht aus einem Rohr 8, dessen oberes Ende durch eine Kurzschlußplatte 9 verschlossen ist. Unterhalb dieser befindet sich die Einkoppelstelle 6, bestehend aus einem quer ins Rohrinnere ragenden Einkoppelstift 10, der mit einer Anschlußstelle für ein zum Mikrowellengenerator 4 führendes Koaxialkabel 11 verbunden ist.

Das untere Ende des Rohrs 8 bildet das Abstrahlende 7 der Hohlleiterantenne 5. Es ist nach unten verjüngt ausgeführt und enthält ein Anpaßelement 12 für eine optimierte Mikrowellenenergieübertragung. Dieses besitzt eine ein- oder mehrfach zylindrisch abgesetzte zylindrische Grundform und ist als dielektrischer Einsatz ausgeführt.

Die den Hohlleiterantennen 5 zugeordneten Mikrowellengeneratoren 4 sind über Steuergeräte 13 an eine Energiequelle angeschlossen. Dabei sind die Steuergeräte 13 so ausgestattet, daß beispielsweise je nach Außentemperatur eine wahlweise permanente oder in vorwählbaren Zeitintervallen erfolgende Einschaltung der Mikrowellengeneratoren 4 erfolgt, so daß entsprechend eine andauernde oder zeitlich begrenzte Einspeisung von Mikrowellenenergie erfolgt.

Beispielsgemäß sind in einem Rohrabschnitt 1.2 auf eine Länge von 1 km in Abständen von jeweils 1 m 1.000 Hohlleiterantennen 5 in die Erdölrohrleitung 1 eingeschweißt. Dadurch läßt sich bei Außentemperaturen von ca. -30° C eine Temperaturerhöhung des geförderten Erdöls im Rohrabschnitt 1.2 von 2° - 3° K über der Gefriertemperatur erreichen. Die erforderlichen Energiekosten für die Beheizung des Erdöls sind vergleichsweise gering.

Die Erfindung ist nicht durch Einzelheiten des vorstehend beschriebenen Ausführungsbeispiels beschränkt. Insbesondere kann die Vorrichtung außer für das Beheizen von zu transportierendem Erdöl (mit geringem Wassergehalt) auch für das Beheizen von anderen zu transportierenden frostgefährdeten fluiden Medien eingesetzt werden, die analog zum Wassermolekül bipolar strukturierte Moleküle besitzen.

### Bezugszeichenliste

- 1: Erdölrohrleitung
- 1.1, 1.2, 1.3: Rohrabschnitt
- 2.1, 2.2: Pumpstation
- 3: Einrichtung zur Einspeisung von Mikrowellenenergie
- 4: Mikrowellengenerator
- 5: Hohlleiterantenne
- 6: Einkoppelstelle
- 7: Abstrahlende
- 8: Rohr
- 9: Kurzschlußplatte
- 10: Einkoppelstift
- 11: Koaxialkabel
- 12: Anpaßelement
- 13: Steuergerät

## Patentansprüche

1. Vorrichtung zum Beheizen von in rohrförmigen Transport- und/oder Förderleitungen transportierten fluiden Medien, insbesondere von Roh- oder raffiniertem Erdöl mit geringem Wassergehalt, wobei der rohrförmigen Transportund/oder Förderleitung eine Einrichtung zur Einspeisung von Mikrowellenenergie zugeordnet ist,
**dadurch gekennzeichnet, daß** in mindestens einem Rohrabschnitt (1.1; 1.2; 1.3) der rohrförmigen Transport- und/oder Förderleitung (1) eine Mehrzahl von Einrichtungen (3) zur Einspeisung von Mikrowellenenergie vorgesehen sind, wobei jede Einrichtung (3) zur Einspeisung von Mikrowellenenergie aus einem Mikrowellengenerator (4) und einer mit diesem gekoppelten Hohlleiterantenne (5) besteht.

2. Vorrichtung nach Anspruch 1, **dadurch gekennzeichnet, daß** der mit einer Mehrzahl von Einrichtungen (3) zur Einspeisung von Mikrowellenenergie ausgestattete Rohrabschnitt (1.1; 1.2; 1.3) der rohrförmigen Transport- und/oder Förderleitung (1) zwischen zwei der rohrförmigen Transport- und/oder Förderleitung (1) zugeordneten Pumpstationen (2.1; 2.2) angeordnet ist.

3. Vorrichtung nach Anspruch 1, **dadurch gekennzeichnet, daß** jede Hohlleiterantenne (5) quer zur Längsachse der rohrförmigen Transport- und/oder Förderleitung (1) derart an dieser angeordnet ist, daß sich der Mikrowellengenerator (4) mit der Einkopplung (6) in die Hohlleiterantenne (5) außerhalb der rohrförmigen Transport- und/oder Förderleitung (1) befindet und die Hohlleiterantenne (5) mit ihrem Abstrahlende (7) sich durch eine Bohrung druckdicht in das Innere der rohrförmigen Transport- und/oder Förderleitung (1) erstreckt.

4. Vorrichtung nach Anspruch 1 und 3, **gekennzeichnet durch** eine linienförmige und gleichteilige Anordnung der Hohlleiterantennen (5) parallel zur Längsachse der rohrförmigen Transport- und/oder Förderleitung (1).

5. Vorrichtung nach Anspruch 1 und 3, **dadurch gekennzeichnet, daß** die Hohlleiterantennen (5) in gleicher oder ungleicher Kreisteilung am Umfang der rohrfömigen Transport- und/oder Förderleitung (1) angeordnet sind.

6. Vorrichtung nach Anspruch 1, 3, 4 oder 5 **dadurch gekennzeichnet, daß** die Abstrahlenden (7) der Hohlleiterantennen (5) etwa im Bereich der Längsachse der rohrförmigen Transport- und/oder Förderleitung (1) angeordnet sind.

7. Vorrichtung nach Anspruch 1, 3, 4 oder 5 **dadurch gekennzeichnet, daß** die Abstrahlenden (7) der Hohlleiterantennen (5) etwa bündig zur Innenfläche der rohrförmigen Transport- und/oder Förderleitung (1) angeordnet sind.

8. Vorrichtung nach Anspruch 1 und einem oder mehreren der folgenden Ansprüche, **dadurch gekennzeichnet, daß** die Hohlleiterantennen (5) in die rohrförmige Transport- und/oder Förderleitung (1) eingeschweißt sind.

9. Vorrichtung nach Anspruch 1 und einem oder mehreren der folgenden Ansprüche, **dadurch gekennzeichnet, daß** die Hohlleiterantenne (5) aus einem Rohr (8) aus Metall oder aus einer Metallegierung besteht, dessen oberes Ende durch eine Kurzschlußplatte (9) verschlossen ist, unterhalb der sich ein mit dem Mikrowellengenerator (4) über ein Kabel (11) verbundener, ins Rohrinnere ragender Einkoppelstift (10) befindet, während das untere Ende als Abstrahlende (7) ausgeführt ist und ein Anpaßelement (12) für die optimale Mikrowellenenergieübertragung aufweist.

10. Vorrichtung nach Anspruch 9, **dadurch gekennzeichnet, daß** das Anpaßelement (12) als dielektrischer Einsatz ausgeführt ist und eine ein- oder mehrfach zylindrisch abgesetzte zylindrische Grundform besitzt.

11. Vorrichtung nach Anspruch 1 und einem oder mehreren der folgenden Ansprüche, **dadurch gekennzeichnet, daß** die Mikrowellengeneratoren (4) über Steuergeräte (13) derart an eine oder mehrere Energiequellen angeschlossen sind, daß eine permanente und/oder in vorwählbaren Zeitintervallen erfolgende Einspeisung von Mikrowellenenergie erfolgt.
